# EUROPEAN PATENT SPECIFICATION

(11) **EP 4 468 692 B1**
(45) Date of publication and mention of the grant of the patent: **30.09.2026**
(21) Application number: 24177416.5
(22) Date of filing: 22.05.2024
(51) Int. Cl.: H04N 1/32, G06T 1/00

(54) **METHOD, APPARATUS, DEVICE AND STORAGE MEDIUM FOR WATERMARK EMBEDDING AND EXTRACTION**
VERFAHREN, VORRICHTUNG, VORRICHTUNG UND SPEICHERMEDIUM ZUR WASSERZEICHENEINBETTUNG UND -EXTRAKTION
PROCÉDÉ, APPAREIL, DISPOSITIF ET SUPPORT DE STOCKAGE POUR L'INCORPORATION ET L'EXTRACTION DE FILIGRANE

(30) Priority: 22.05.2023 CN 202310584038
(43) Date of publication of application: 27.11.2024
(73) Proprietor: Beijing Volcano Engine Technology Co., Ltd., Beijing 100190 (CN)
(72) Inventor: GUO, Hengchang, Beijing, 100028 (CN); GUO, Feng, Beijing, 100028 (CN); LUO, Junwei, Beijing, 100028 (CN); SU, Xiaodong, Beijing, 100028 (CN); LI, Minglei, Beijing, 100028 (CN)
(74) Representative: Marks & Clerk LLP

(56) References cited:
- WO-A1-00/39954
- ZHU LEQING ET AL: "Robust location-secured high-definition image watermarking based on key-point detection and deep learning", OPTIK, WISSENSCHAFTLICHE VERLAG GMBH, DE, vol. 248, 20 October 2021 (2021-10-20), XP086859863, ISSN: 0030-4026, [retrieved on 20211020], DOI: 10.1016/J.IJLEO.2021.168194
- LAURITZEN J. S ET AL: "Perceptual rules for watermarking images: a psychophysical study of the visual basis for digital pattern encryption", vol. 3644, 1 January 1999 (1999-01-01), pages 392 - 402, XP093213780, ISBN: 978-0-8194-3115-8, Retrieved from the Internet <URL:https://www.spiedigitallibrary.org/conference-proceedings-of-spie/3644/0000/Perceptual-rules-for-watermarking-images--a-psychophysical-study-of/10.1117/12.348460.full#_=_> [retrieved on 20241010], DOI: 10.1117/12.348460

## Description

This application claims priority to Chinese Patent Application No. 2023105840387 entitled "METHOD, APPARATUS, DEVICE AND STORAGE MEDIUM FOR WATERMARK EMBEDDING AND EXTRACTION" filed on May 22, 2023.

### FIELD

Example embodiments of the present disclosure generally relate to the field of image processing, and more particularly, to a method, apparatus, device and computer readable storage medium for watermark embedding and extraction.

### BACKGROUND

With the popularization and rapid development of information technologies, the propagation speed of digital carriers (e. g., images, videos, etc.) become faster and the propagation range of the digital carriers becomes wider. In order to better protect a digital carrier, digital watermarking technology such as dark watermarking or hidden watermarking emerges. By embedding the watermark information into the digital carrier, the purpose of leakage source tracing and copyright protection can be achieved without affecting the use value of the original carrier. In view of this, it is desired to realize a reliable and robust watermark solution.

Zhu Leqing et al (Robust location-secured high-definition image watermarking based on key-point detection and deep learning) describes a blind high-definition image watermarking scheme named multiscale-fusion dilated ResNet-based high-deifnition watermarking (MDResNet-HDWM), which is based on a key-point detection and deep learning framework. The proposed watermarking scheme embeds watermark in multiple non-overlapping regions, whose locations are secured with a private key referring to several dominant key points.

### SUMMARY

In a first aspect of the present disclosure, a method of watermark embedding is provided. The method includes: determining, based on a set of key points identified in an image to be processed, at least one image block to be processed in the image to be processed wherein determining the at least one image block to be processed comprises: determining a set of candidate image blocks in the image to be processed based on respective feature values of the set of key points and respective positions of the set of key points in the image to be processed, each candidate image block comprising at least one key point in the set of key points determining respective texture complexities for the set of candidate image blocks; and selecting the at least one image block to be processed from the set of candidate image blocks based on the respective texture complexities; generating, based on watermark information and the at least one image block to be processed, at least one target image block corresponding to the at least one image block to be processed respectively, each target image block being embedded with at least a portion of the watermark information; and generating a target image for the image to be processed by replacing the at least one image block to be processed with the at least one target image block in the image to be processed respectively.

In a second aspect of the present disclosure, a method of watermark extraction is provided. The method includes: determining, based on a set of key points identified in an image to be extracted, at least one target image block in the image to be extracted, wherein determining the at least one target image block comprises: determining a set of candidate image blocks in the image to be extracted based on respective feature values of the set of key points and respective positions of the set of key points in the image to be extracted, each candidate image block comprising at least one key point in the set of key points; and determining the at least one target image block based on the set of candidate image blocks; wherein a size of a target image block of the at least one target image block is larger than a size of a candidate image block of the set of candidate image blocks, and the set of candidate image blocks do not overlap with each other; and determining, based on the at least one target image block respectively, watermark information embedded in the image to be extracted.

In a third aspect of the present disclosure, there is provided an electronic device. The device includes at least one processing unit; and at least one memory coupled to the at least one processing unit and storing instructions configured to be executed by the at least one processing unit, the instructions, when executed by the at least one processing unit, causing the electronic device to implement the method of the first aspect or the second aspect.

In a fourth aspect of the present disclosure, a computer readable storage medium is provided. The computer readable storage medium has stored thereon a computer program, which is executable by a processor to implement the method of the first aspect or the second aspect.

It should be appreciated that the content described in this section is not intended to limit critical features or essential features of the embodiments of the disclosure, nor is it intended to limit the scope of the disclosure. Other features of the present disclosure will become readily appreciated from the following description.

### BRIEF DESCRIPTION OF THE DRAWINGS

The above and other features, advantages, and aspects of various embodiments of the present disclosure will become more apparent with reference to the following detailed description in conjunction with the accompanying drawings. In the drawings, the same or similar reference numerals denote the same or similar elements, wherein:
FIG. 1A illustrates a schematic diagram of an example environment for watermark embedding in which some embodiments of the present disclosure can be implemented;
FIG. 1B illustrates a schematic diagram of an example environment for watermark extraction in which some embodiments of the present disclosure can be implemented;
FIG. 2 illustrates a flowchart of a watermark embedding process according to some embodiments of the present disclosure;
FIG. 3 illustrates a schematic block diagram of a watermark embedding model according to some embodiments of the present disclosure;
FIG. 4 illustrates a flowchart of a watermark extraction process according to some embodiments of the disclosure;
FIG. 5 illustrates a schematic diagram of a model training architecture according to some embodiments of the present disclosure;
FIG. 6 illustrates a schematic diagram of an example watermark embedding process according to some embodiments of the present disclosure;
FIG. 7 illustrates a schematic diagram of an example watermark extraction process according to some embodiments of the disclosure;
FIG. 8 illustrates a schematic structural block diagram of an apparatus for watermark embedding according to certain embodiments of the present disclosure;
FIG. 9 illustrates a schematic structural block diagram of an apparatus for watermark extraction according to certain embodiments of the present disclosure; and
FIG. 10 illustrates a block diagram of an electronic device in which one or more embodiments of the present disclosure may be implemented.

### DETAILED DESCRIPTION

The following will describe the embodiments of the present disclosure in more detail with reference to the accompanying drawings. Although some embodiments of the present disclosure are shown in the drawings, it should be understood that the present disclosure can be implemented in various forms and should not be construed as limited to the embodiments set forth herein. On the contrary, these embodiments are provided for a more thorough and complete understanding of the present disclosure. It should be understood that the drawings and embodiments of the present disclosure are provided for illustrative purposes only and are not intended to limit the scope of protection of the present disclosure.

In the description of the embodiments of the present disclosure, the term "including" and the like should be understood as non-exclusive inclusion, that is, "including but not limited to". The term "based on" should be understood as "based at least in part on". The term "one embodiment" or "the embodiment" should be understood as "at least one embodiment". The term "some embodiments" should be understood as "at least some embodiments". Other explicit and implicit definitions may also be included below. As used herein, the term "model" may denote an association relationship between respective data. The association relationship may be obtained, for example, based on a variety of technical solutions that are currently known and/or will be developed in the future.

It will be appreciated that the data involved in the technical solution (including but not limited to the data itself, the obtaining or use of the data) should comply with the requirements of the corresponding legal regulations and related provisions.

It will be appreciated that, before using the technical solutions disclosed in the various embodiments of the present disclosure, the user shall be informed of the type, application scope, and application scenario of the personal information involved in this disclosure in an appropriate manner and the user's authorization shall be obtained, in accordance with relevant laws and regulations.

For example, in response to receiving an active request from a user, prompt information is sent to the user to explicitly prompt the user that an operation requested by the user will require obtaining and use of personal information of the user. Thus, the user can autonomously select, according to the prompt information, whether to provide personal information to software or hardware such as an electronic device, an application program, a server, or a storage medium that executes the operations of the technical solutions of the present disclosure.

As an optional but non-limiting implementation, in response to receiving an active request from the user, prompt information is sent to the user, for example, in the form of a pop-up window, and the pop-up window may present the prompt information in the form of text. In addition, the pop-up window may also carry a selection control for the user to select whether he/she "agrees" or "disagrees" to provide personal information to the electronic device.

It can be understood that the above notification and user authorization process are only illustrative which do not limit the implementation of this disclosure. Other methods that meet relevant laws and regulations can also be applied to the implementation of this disclosure.

As used herein, the term "model" may learn association between corresponding inputs and outputs from training data, so that after the training is complete, a corresponding output may be generated for a given input. The generation of the model may be based on a machine learning technology. Depth learning is a machine learning algorithm that processes inputs and provides corresponding outputs by using a multi-tiered processing unit. A neural network model is one example of a model based on deep learning. Herein, "model" may also be referred to as "machine learning model", "learning model", "machine learning network", or "learning network", which may be used interchangeably herein.

A "neural network" is a machine learning network based on depth learning. A neural network is capable of processing inputs and providing corresponding outputs, which typically include an input layer and an output layer and one or more hidden layers between the input layer and the output layer. Generally, a neural network used in a deep learning application includes a lot of hidden layers, thereby increasing the depth of the network. The various layers of the neural network are connected in sequence such that the output of a previous layer is provided as the input of a subsequent layer, wherein the input layer receives the input of the neural network and the output of the output layer is provided as the final output of the neural network. Each layer of the neural network includes one or more nodes (also referred to as processing nodes or neurons), and each node processes the input from a previous layer.

Generally, machine learning may roughly include three phases, namely a training phase, a testing phase, and an application phase (also referred to as an inference phase). In the training phase, a given model may be trained by using a large amount of training data, constantly and iteratively updating parameter values until the model obtains consistent reasoning that meets expected goals from the training data. By training, the model may be considered as being able to learn an association between input and output from training data (also referred to as mappings of input to output). A parameter value of the trained model is determined. In the testing stage, a test input is applied to the trained model, so as to test whether the model can provide a correct output, thereby determining the performance of the model. In the application phase, the model may be configured to process actual input based on the trained parameter value to determine corresponding output.

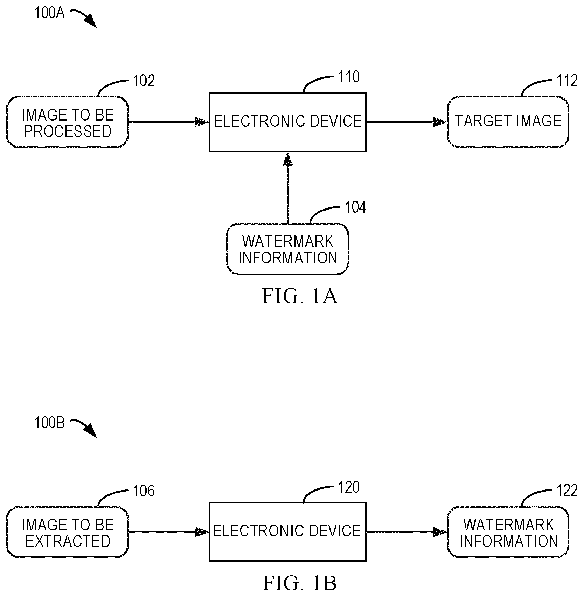

FIG. 1A illustrates a schematic diagram of an example environment 100A for watermark embedding in which some embodiments of the present disclosure can be implemented. As shown in FIG. 1A, example environment 100A may include an electronic device 110.

The image to be processed 102 is an image to be embedded with a watermark, which may be an image of any format, any size, any color (e. g., a color image, a black and white image, a grayscale image), etc. The image to be processed 102 may be an image obtained by the electronic device 110 from another device, a locally stored image, or an image captured by the electronic device 110 through its image collection component (for example, a camera).

The watermark information 104 may also be generally referred to as a digital watermarking. The watermark information 104 may be any form of information, for example, it may be a string of bits. The electronic device 110 may generate a target image 112 for the image 102 to be processed based on the image 102 to be processed and the watermark information 104. That is, the electronic device 110 may embed the watermark information 104 into the image to be processed 102 to generate the target image 112. In particular, in the target image 112, the watermark information may not be visible, i. e., imperceptible to the human eye.

In environment 100A, the electronic device 110 may be any type of devices having computing-capability, including a terminal device or a server device. The terminal device may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a game device, or any combination of the above devices, including accessories and peripherals for these devices, or any combination thereof.

The server device may be an independent physical server, or may also be a server cluster or a distributed system constituted of a plurality of physical servers, and may also be a cloud server providing basic cloud computing services such as cloud services, cloud databases, cloud computing, cloud functions, cloud storage, network services, cloud communications, middleware services, domain name services, security services, content distribution networks, and big data and artificial intelligence platforms. A server device may, for example, include a computing system/server, such as a mainframe, an edge computing node, an electronic device in a cloud environment, etc.

FIG. 1B illustrates a schematic diagram of an example environment 100B for watermark extraction in which some embodiments of the present disclosure can be implemented. As shown in FIG. 1B, example environment 100B may include an electronic device 120.

The image to be extracted 106 is an image embedded with a watermark. For example, the image to be extracted 106 may be any image of any format, any size, any color, or the like. The image to be extracted 106 may be an image obtained by the electronic device 120 from other devices through communication or an image stored locally by the electronic device 120. The electronic device 120 may extract watermark information 122 from the image to be extracted 106. The extracted watermark information 122 may be further verified to determine whether the extracted watermark is a correct watermark.

Similar to the electronic device 110 in environment 100A, the electronic device 120 in environment 100B may also be any type of devices having computing-capability, including a terminal device or a server device. In some embodiments, the electronic device 110 and the electronic device 120 may be the same device. For example, an owner of the image to be processed 102 may use the same device to perform watermark embedding on the image to be processed 102 and perform watermark extraction on the obtained image to be extracted 106. In some embodiments, the electronic device 110 and the electronic device 120 may be different devices. For example, an owner of an image may use the electronic device 110 to embed a watermark into the image, and a user of the image may use the electronic device 120 to extract watermark information from the image to verify the image.

It should be understood that the components and arrangements in environment 100A and environment 100B illustrated in FIGS. 1A and 1B are merely examples. Computing systems suitable for implementing the exemplary embodiments described in this disclosure may include one or more different components, other components, and/or different arrangements.

As mentioned above, watermark information not perceivable by human eyes (also referred to as a dark watermark) may be added to an image. Thus, the intended purpose can be achieved without affecting the normal use of an image, for example, the purpose of leakage tracing and copyright protection may be achieved. Conventional solutions of the dark watermarking technology mainly include an image processing-based solution and a depth learning-based solution. The image processing-based solution often require a manual design for different feature information of the image. Therefore, the operations in such a solution are complex, and robustness of the image under various changes cannot be taken into account. In the depth learning-based solution, watermark embedding and extraction are implemented by training an encoder-decoder model, and data enhancement is performed by introducing a change of an image in a training process, so as to improve the robustness of the embedded watermark. However, conventional depth learning-based solution can only embed watermarks into images that are consistent with the model input size but cannot achieve both the visual effects and robustness.

According to example embodiments of the present disclosure, improved solutions for watermark embedding and extraction are provided. According to this solution, at the watermark embedding side, am image block to be processed may be determined based on key points identified from the image to be processed. Watermark information may be embedded into the image block to be processed, so as to generate a target image block. Then the target image block may be used to replace the image block to be processed in the image to be processed, so as to obtain a target image embedded with the watermark information. At the watermark extraction side, a target image block may be determined based on key points identified from the image to be processed, and watermark information is extracted from the target image block.

In embodiments of the present disclosure, key points are utilized in determining image blocks for embedding watermarks, since the key points are not significantly changed when the image is changed (e. g., compressed, noised, rotated, etc.), robustness of watermark embedding may be improved. Correspondingly, key points are utilized in watermark extraction to determine the image block on which the watermark extraction is performed. This may reliably locate an image area that may contain the watermark. Also, in an embodiment of the present disclosure, the watermark embedding and extraction are performed in the unit of image block rather than in the unit of the entire image. In this way, images of arbitrary resolution may be processed, enabling the watermark embedding solution and the watermark extraction solution with wide applicability.

Some example embodiments of the present disclosure will be described below by continuing referring to the accompanying drawings.

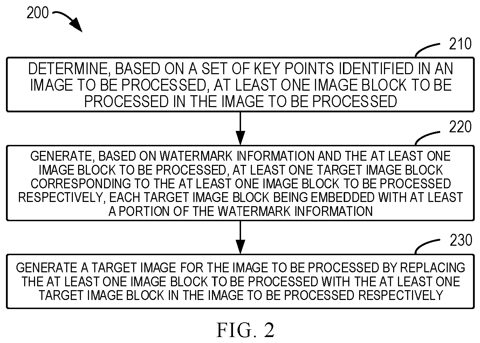

FIG. 2 illustrates a flowchart of a watermark embedding process 200 according to some embodiments of the present disclosure. The process 200 may be implemented at the electronic device 110. For ease of discussion, the process 200 will be described with reference to the environment 100A of FIG 1A.

At block 210, the electronic device 110 determines, based on a set of key points identified in an image to be processed 102, at least one image block to be processed in the image to be processed 102. In embodiments of the present disclosure, a key point may also be referred to as a feature point, which refers to one or more pixels that are visually characterized. In some embodiments, a key point may be a corner point that represents one or more pixels that are particularly prominent in terms of a certain attribute. For example, a key point may be an extremum point of a certain attribute. The image block to be processed may have a predetermined size, e. g. 128*128.

In some embodiments, these key points may be identified by the electronic device 110. The electronic device 110 may determine the key points of image 102 to be processed using a key point detection algorithm. Any suitable key point detection algorithm may be employed, such as, but not limited to, the Feature from Accelerated Segment Test (FAST) algorithm, Scale Invariant Feature Transform (SIFT) algorithm, Directional FAST, and Overturned Binary Robust Basic Feature (ORB) algorithm. In some embodiments, the electronic device 110 may utilize an ORB key point detection algorithm to determine key points of the image 102 to be processed. The ORB key point detection algorithm has good robustness, for example, even if the image to be processed is subjected to various image processing operations such as compression, noise-addition, clipping, translation, and rotation, the key points determined by using the ORB key point detection algorithm will not change significantly. Therefore, in such an embodiment, utilizing the ORB algorithm helps to further improve the robustness of watermark embedding.

In some embodiments, the electronic device 110 may also determine key points in the image 102 to be processed by using a trained key point detection model. The specific type of the model structure may be selected according to actual application needs. In some embodiments, the key points in the image to be processed 102 may be identified by other devices, and the electronic device 110 may obtain information about the identified key points from these other devices.

The image block to be processed can be determined based on the key points in a variety of suitable ways. In some embodiments, the electronic device 110 can determine at least one image block to be processed in the image to be processed 102 directly based on the respective locations of the set of key points in the image to be processed 102. For example, the electronic device 110 may determine a set of image blocks in the image to be processed 102 that are respectively centered on each of the set of key points, as a set of image blocks to be processed.

In some embodiments, in order to determine the image block to be processed, the feature values of the key points may be taken into account. The identified key points may be filtered by using the feature values, and then the image block to be processed is determined based on the filtered key points. The electronic device 110 may also determine a feature value for each key point while determining a set of key points. A feature value may represent the robustness of a corresponding key point, i. e., a probability that a point is detected as a key point when the image changes. For example, the electronic device 110 may determine a set of key points in the image to be processed 102 and a respective feature value of each key point by using the ORB key point detection algorithm.

The electronic device 110 can determine a set of candidate image blocks in the image to be processed 102 based on the respective feature values of the set of identified key points and the respective positions of the set of identified key points in the image to be processed 102. For example, the set of key points may be sorted based on their respective feature values. To ensure robustness of the filtered key points, the electronic device 110 may sort the set of key points in descending order based on their respective feature values. That is, the feature values corresponding to the top key points are greater, and the feature values corresponding to the bottom key points are smaller. For each key point, the electronic device 110 may determine an image block of a predetermined size (e. g., 128×128) in the image to be processed 102 that includes the key point. For example, the electronic device 110 may determine a set of image blocks in the image to be processed that are respectively centered on each of the set of key points. Then, the electronic device 110 may filter the set of image blocks starting from an image block corresponding to a key point with a higher feature value, according to the sorting result of the key points. Correspondingly, the image block corresponding to the key point with a higher feature value may be determined as a candidate image block.

The candidate image block determined in the foregoing manner may include more than one key point, and different candidate image blocks may be overlapped with each other. In some embodiments, when filtering based on feature values of key points, overlap between image blocks may be considered to obtain a set of candidate image blocks in which different candidate image blocks are not overlapped with each other. For example, the electronic device 110 may determine, through an Intersection Over Union (IOU) algorithm, whether image blocks are overlapped with each other.

Then, the electronic device 110 may determine at least one image block to be processed from the set of candidate image blocks. In some embodiments, these candidate image blocks may be directly determined as image blocks to be processed. In some embodiments, an image block to be processed may be determined from the set of candidate image blocks based on the sorting result of feature values of corresponding key points. For example, a predetermined number of candidate image blocks may be selected as the image blocks to be processed. It should be noted that, to ensure the visual effect of the target image finally obtained by embedding the watermark, the number of the image blocks to be processed should not be too large. For example, the electronic device 110 may determine candidate image blocks in the set of candidate image blocks corresponding to the key points that are ranked top 10 in terms of feature values, as the image blocks to be processed, respectively.

To improve the visual effect, in some embodiments, the electronic device 110 may also determine a texture complexity of each candidate image block in the set of candidate image blocks. The higher the texture complexity, the harder it is for the human eye to perceive the change in the corresponding image block. For example, the electronic device 110 may determine the texture complexity of each candidate image block by using any suitable texture calculation algorithm. The texture calculation algorithm may include, for example, a local binary pattern (LBP) algorithm, a just noticeable difference (JND) algorithm, and the like. For example, the electronic device 110 may determine the texture complexity of each candidate image block by using a JND algorithm. Alternatively, or additionally, in some embodiments, the electronic device 110 may also determine the texture complexity of each candidate image block using the trained texture calculation model. The specific type of model structure may be selected according to actual application requirements.

Then, the electronic device 110 may select, based on the corresponding texture complexities of the candidate image blocks, at least one image block to be processed from the set of candidate image blocks. In some embodiments, the electronic device 110 may sort the set of candidate image blocks in descending order based on the corresponding texture complexities, and then select, based on the sorting result, a preset number of candidate image blocks from the set of candidate image blocks as image blocks to be processed. For example, the electronic device 110 may select, from the set of candidate image blocks, top 10 candidate image blocks in terms of the corresponding texture complexity, and determine the 10 candidate image blocks as the image blocks to be processed. In some embodiments, the electronic device 110 may compare the respective texture complexities of the set of candidate image blocks with a threshold, and select, based on the comparison result, an image block to be processed from the set of candidate image blocks. The threshold may be input into the electronic device 110 by the user in advance, or may be determined by the electronic device 110 itself. The electronic device 110 may determine a candidate image block with a texture complexity higher than a threshold as the image block to be processed.

The higher the texture complexity is, the harder a human eye can perceive a change in an image. In view of this, selecting an image block with high texture complexity for watermark embedding is beneficial in obtaining an embedded watermark which is hard to perceive by a human eye. This may advantageously improve the visual effect of the obtained target image.

Alternatively, or additionally, in some embodiments, in addition to the texture complexity, an image block to be processed may be selected from the candidate image blocks based on other attributes of the image blocks. For example, a color complexity of each candidate image block may be determined, for example, the more colors there are, the higher the complexity may be, and/or the more disordered colors are, the higher the complexity may be. Then, a preset number of candidate image blocks with high color complexities may be selected as the image blocks to be processed. Similar to the texture complexity, the higher the color complexity, the harder a human eye can perceive changes in the image. In this way, the visual effect of the obtained target image can be advantageously improved.

It should be understood that the specific number and sizes of image blocks involved in the foregoing description are exemplary only, which are not intended to limit the scope of the present disclosure. Other suitable numbers and sizes of image blocks are also possible.

Continuing with the process 200, at block 220, the electronic device 110 generates, based on watermark information 104 and the at least one image block to be processed, at least one target image block corresponding to the at least one image block to be processed respectively. Each target image block may be embedded with at least a portion of the watermark information 104. For example, each target image block may be embedded with entire watermark information 104. As another example, the watermark information 104 may be divided into different portions, each target image block may be embedded with one or more of those portions. Embodiments of the present disclosure are not limited in this regard.

The electronic device 110 may employs any suitable watermark embedding technology to generate a corresponding target image block based on the watermark information and the image block to be processed. The watermark embedding technology may include, for example, but not limited to, superposition technology, least significant bit technology (LSB), quantization index modulation technology (QIM), wavelet transform technology, and the like.

In some embodiments, the electronic device 110 may utilize the trained one or more machine learning models to generate the target image blocks. The machine learning model may include, for example, a convolutional neural network (CNN), a feedforward neural network (FNN), a recurrent neural network (RNN), etc. The trained models may be disposed in electronic device 110, or in other devices accessible by electronic device 110.

In some embodiments, to further ensure sufficient fusion of the watermark information and the image block to improve the robustness of watermark embedding, the electronic device 110 may implement watermark embedding through multilevel stitching of the watermark information and the image block. For example, vectorization and tokenization may be performed on the watermark information 104 (e. g., represented in binary strings) to obtain the feature of the watermark information 104, and the feature may be considered as a vectorized representation of the watermark information 104 and may also be referred to as a watermark feature. In some embodiments, error correction bits may be added to binary watermark information using a Bose-Ray-Chaudhuri-Hocquenghem (BCH) code, thereby obtaining a watermark binary string. By way of example instead of any limitation, a 64-bit watermark binary string may be obtained, which may include 24-bit error correction bits. The feature of the watermark binary string added with the error correction bits may then be determined.

Correspondingly, for each image block to be processed, feature extraction may be performed on the image block to be processed to obtain a feature of the image block to be processed. Any suitable feature extraction algorithm may be used. Further, the electronic device 110 may generate a fusion feature of the watermark information and the image block to be processed based on the feature of the watermark information 104 and the feature of the image block to be processed. It should be understood that, before fusing the feature of the watermark information 104 and the feature of the image block to be processed, the electronic device 110 may first adjust the watermark feature and the image block to be processed to have the same dimension.

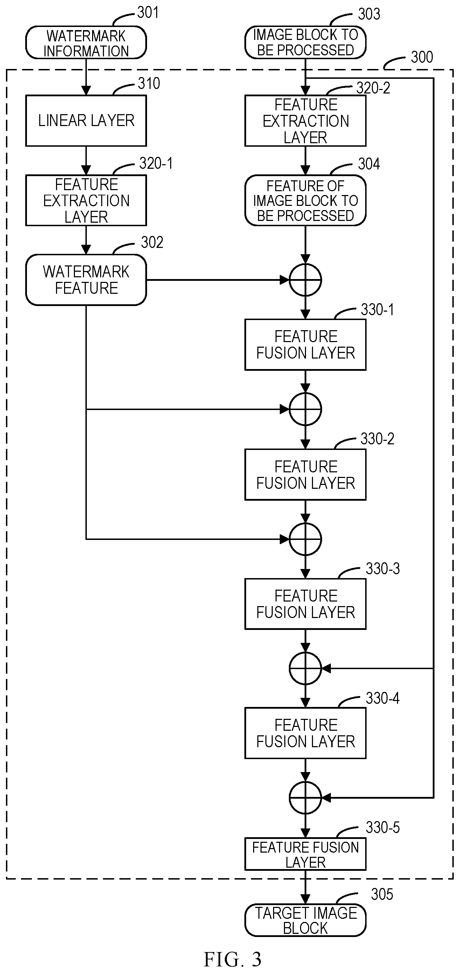

Then, the electronic device 110 may generate a target image block based on the fusion feature, the watermark feature and the image block to be processed. In some embodiments, the electronic device 110 may obtain the target image block by fusing the fusion feature, the watermark feature and the feature of the image block to be processed multiple times. In some embodiments, the electronic device 110 may implement embedding of watermark information into an image block using a trained watermark embedding model. Such an example embodiment is described below with reference to FIG. 3.

FIG. 3 illustrates a schematic block diagram of a watermark embedding model 300 according to some embodiments of the disclosure. As shown in FIG. 3, the watermark embedding model 300 includes a linear layer 310, a feature extraction layer 320-1 and a feature extraction layer 320-2 (also collectively referred to as feature extraction layer 320) and feature fusion layers 330-1, 330-2, 330-3, 330-4 and 330-5 (also collectively referred to as feature fusion layer 330). In some embodiments, the feature extraction layer 320 and the feature fusion layer 330 may include at least one or more of a Multi-Channel Attention (SeNet) layer, a convolutional layer (Conv), an upsampling layer, a downsampling layer, a normalized (BN) layer, an activation (Relu) layer. In general, the watermark embedding model 300 may include a portion for extracting watermark information features (including a linear layer 310 and a feature extraction layer 320-1 in this example), a portion for extracting a feature of an image block (including a feature extraction layer 320-2 in this example), and a portion for performing multi-level stitching on the watermark information and the image block (including a feature fusion layer 330-1, a feature fusion layer 330-2, and a feature fusion layer 330-3 in this example).

The watermark information 301 as shown in FIG. 3 may be considered as an example of watermark information 104, and the image block to be processed 303 may be considered as an example of the image block to be processed determined at block 201. The watermark information 301 and the image block 303 to be processed are input to the watermark embedding model 300. The watermark embedding model 300 obtains a watermark feature 302 of the watermark information 301 through the linear layer 310 and the feature extraction layer 320-1. For example, the linear layer 310 may be a simple fully-connected neural network. The watermark embedding model 300 obtains a feature 304 of the image block to be processed through the feature extraction layer 320-2. The watermark feature 302 and the feature 304 of the image block to be processed may be provided together to the feature fusion layer 330-1 to obtain the fusion feature.

In order to enhance the performance of the watermark information 301 in the finally obtained target image block 305, in some embodiments, the watermark embedding model 300 may generate an intermediate feature enhanced with watermark information 301 based on the fusion feature and watermark feature 302. As shown in FIG. 3, the fusion feature output by the feature fusion layer 330-1 is provided to the feature fusion layer 330-2 together with the watermark feature 302 to obtain the first intermediate feature enhanced with the watermark information 301. The first intermediate feature output by the feature fusion layer 330-2 are provided to the feature fusion layer 330-3 together with watermark feature 302 to obtain a second intermediate feature enhanced with watermark information 301.

Then, the intermediate feature enhanced with the watermark information may be combined with the image block to be processed 303 to generate the target image block 305. In some embodiments, in order to ensure that the similarity between the target image block 305 and the image block 303 to be processed is relatively high, the watermark embedding model 300 may also generate the target image block 305 based on the intermediate features and the image block 303 to be processed, and the target image block 305 generated in this way is enhanced with the image block 303 to be processed. As shown in FIG. 3, the second intermediate feature output by the feature fusion layer 330-3 and the image block to be processed 303 are provided to the feature fusion layer 330-4 to obtain the first target feature. The first target feature output by the feature fusion layer 330-4 and the image block to be processed 303 are provided to the feature fusion layer 330-5 to obtain the target image block 305.

In this way, the watermark information and the image block to be processed may be fully fused, which helps improve the robustness of watermark embedding. It should be understood that the types, numbers, and connection relationships of the layers in the watermark embedding model shown in FIG. 3 are exemplary only, which are not intended to limit the scope of the present disclosure. Any suitable structure may be employed to implement the watermark embedding model.

The foregoing describes an example in which the fusion feature is enhanced by using the watermark information, and then the target image is enhanced by using the image block to be processed. In other embodiments, other manners may also be adopted to generate the target image block based on the fusion feature, the feature of the watermark information, and the feature of the image block to be processed. For example, the fusion feature, the feature of the watermark information, and the feature of the image block to be processed may be stitched together, and then a target image block is generated by using the stitched feature.

Referring back to FIG. 2, for each image block to be processed among the at least one image block to be processed determined in block 210, the electronic device 110 may generate a corresponding target image block by using the foregoing watermark embedding model 300, so as to obtain the at least one target image block.

At block 230, the electronic device 110 generates a target image 112 for the image to be processed 102 by replacing at least one image block to be processed with the at least one target image block in the image to be processed 102, respectively. For each image block to be processed, the electronic device 110 may replace the image block to be processed with the generated corresponding target image block, so as to obtain the target image 112. Since the watermark information is embedded in the target image block, the target image 112 after replacement that includes the target image block is an image into which the watermark information is embedded.

Some example embodiments of watermark embedding of the present disclosure are described above. In general, key points in an image may be utilized to determine an image block for watermark embedding. In this way, the watermark embedding can be realized with high robustness and a wide application range. In addition, compared with embedding the watermark in the whole image, the present solution embeds the watermark in a partial region which is not perceived by human eyes, so that the visual effect and the increase of the image data amount are obviously improved. Some example embodiments for watermark extraction of the present disclosure will be continuously described below with reference to the accompanying drawings.

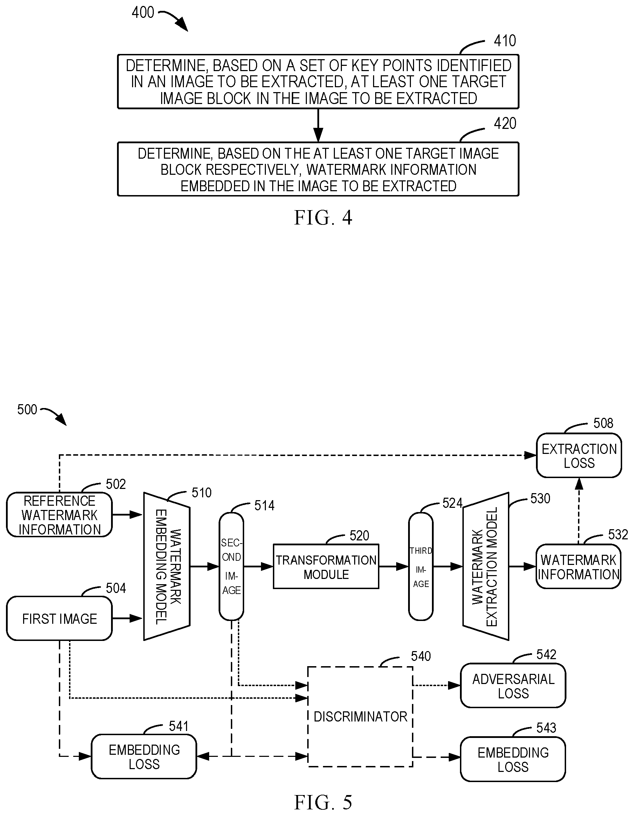

FIG. 4 illustrates a flowchart of a watermark extraction process 400 according to some embodiments of the present disclosure. The process 400 may be implemented at the electronic device 120. For ease of discussion, the process 200 will be described with reference to the environment 100B of FIG. 1B.

At block 410, the electronic device 120 determines, based on a set of key points identified in an image to be extracted 106, at least one target image block in the image to be extracted 106. Similar to the identification of key points in the image to be processed 102, the electronic device 120 may determine a set of key points in the image to be extracted 106 using any suitable key point detection algorithm or using a trained key point detection model. Identification of the key points in the image to be extracted 106 is not further described herein.

The target image block may be determined based on the key points in a variety of suitable ways. In some embodiments, electronic device 120 may determine at least one target image block in image to be extracted 106 based directly on respective locations of the set of key points in image to be extracted 106. For example, the electronic device 120 may determine a set of image blocks in the image to be extracted 106 that are respectively centered on each of the set of key points, as a set of target image blocks.

In some embodiments, in order to determine a target image block, the feature values of the key points may be taken into account. The identified key points may be filtered by using the feature values, and then the target image block is determined based on the filtered key points. The electronic device 120 may also determine a feature value for each key point while determining the set of key points. A feature value may represent the robustness of a corresponding key point, i. e., the probability that a point is detected as a key point when an image changes. For example, the electronic device 120 may determine a set of key points in the image to be extracted 106 and a respective feature value for each key point by using the ORB key point detection algorithm.

The electronic device 120 may determine a set of candidate image blocks in image to be extracted 106 based on the respective feature values of the set of identified key points and the respective positions of identified key points in the image to be extracted 106. For example, the set of key points may be sorted based on their respective feature values. To ensure robustness of the filtered key points, the electronic device 120 may sort the set of key points in descending order based on their respective feature values. That is, the feature values corresponding to the top key points are greater, and the feature values corresponding to the bottom key points are smaller. For each key point, the electronic device 120 may determine an image block of the first size (e. g., 64*64) in the image to be extracted 106 that includes the key point. For example, the electronic device 120 may determine a set of image blocks in the image to be extracted 106 that are respectively centered on each of the set of key points. Then, the electronic device 120 may filter the set of image blocks starting from an image block corresponding to a key point with a higher feature value, according to the sorting result of the key points. Correspondingly, the image block corresponding to the key point with a higher feature value may be determined as a candidate image block.

The candidate image block determined in the above manner may include more than one key point, and different candidate image blocks may be overlapped with each other. In some embodiments, when filtering based on feature values of key points, the overlap between image blocks may be considered to obtain a set of candidate image blocks in which different candidate image blocks are not overlapped with each other. For example, the electronic device 110 may determine, through an IOU algorithm, whether image blocks are overlapped with each other.

Then, the electronic device 120 may determine at least one target image block from the set of candidate image blocks. In some embodiments, these candidate image blocks may be directly determined as image blocks to be processed. In some embodiments, a target image block may be determined from the set of candidate image blocks based on the sorting result of feature values of corresponding key points. For example, a predetermined number of candidate image blocks may be selected as the target image blocks. It should be noted that, compared with the number of image blocks to be processed selected in the watermark embedding process, the number of target image blocks selected in the watermark extraction process is larger. In this way, a probability of hitting a key point used during embedding may be improved. For example, the electronic device 120 may determine 50, from the set of candidate image blocks, candidate image blocks corresponding to the key points that are ranked top 50 in terms of feature values, as the target image blocks.

In some embodiments, the size of the target image block may be larger than the size of the candidate image block. If the candidate image block has a first size and the target image block has a second size, the second size is larger than the first size. In such embodiments, for each candidate image block, the electronic device 120 may determine, based on a position of the candidate image block in the image to be extracted 106, an image block in the image to be extracted 106 that includes a key point in the candidate image block and has the second size, as the target image block. For example, an image block centered on the key point and having a second size may be determined as the target image block. For example, if a candidate image block has a first size of 64*64, the target image block may have a second size of 128*128. In such an example, an image region centered on a key point and of a size 128*128 may be determined to be the target image block. In this embodiment, the candidate image blocks and the corresponding target image blocks may have a same center, for example, the center may be a corresponding key point. In addition, although different candidate image blocks do not overlap each other, different target image blocks may be overlapped.

Continuing with process 400, at block 420, the electronic device 120 determines, based on the at least one target image block respectively, watermark information embedded in the image to be extracted. That is, watermark information may be extracted from these target image blocks respectively. For example, if there are a plurality of target image blocks, a plurality of binary watermark strings may be obtained. Then, an error correction algorithm (for example, a BCH error correction algorithm) may be used to perform a verification, and a watermark string successfully verified is a correct watermark string.

At block 420, the electronic device 120 may employ any suitable watermark extraction technology to extract watermark information from the target image block. The watermark extraction technology may include, for example, but not limited to, a least significant bit technology (LSB), a discrete cosine transform (DCT), etc.

In some embodiments, the electronic device 120 may extract watermark information 122 using one or more trained machine learning models. Neural networks may include, for example, a convolutional neural network (CNN), a feedforward neural network (FNN), a recurrent neural network (RNN), and the like. These trained models may be disposed in electronic device 120, or in other devices accessible by electronic device 120. In particular, in some embodiments, a machine learning model for watermark extraction may be trained together with a machine learning model for watermark embedding.

Some example embodiments of watermark extraction of the present disclosure are described above. In general, key points in an image may be utilized to determine image blocks for watermark extraction. In this way, the accuracy of watermark extraction can be ensured while conveniently and quickly implementing the watermark extraction.

As mentioned above, in some embodiments, the electronic device 110 may utilize the trained watermark embedding model to embed the watermark into the image block to be processed, and the electronic device 120 may utilize the trained watermark extraction model to extract the watermark from the target image block. In some embodiments, the watermark embedding model and the watermark extraction model may be trained together.

FIG. 5 illustrates a schematic diagram of a model training architecture 500 according to some embodiments of the disclosure. As shown in FIG. 5, the architecture 500 includes a watermark embedding model 510 (e. g., watermark embedding model 300), a transformation module 520, and a watermark extraction model 530.

Reference watermark information 502 and a first image 504 are input to the watermark embedding model 510. The watermark embedding model 510 embeds the reference watermark information 502 into the first image 504 to obtain a second image 514.

The transformation module 520 may perform multiple transformation operations on the second image 514 to generate a third image 524. That is, the second image 514 is transformed into the third image 524 using the transformation module 520. The multiple transformation operations performed may be any combination of two or more of the candidate transformation operations. Examples of candidate transformation operations may include, but not limited to, compression, noise addition (e. g., Gaussian noise addition), clipping, color transformation, rotation, scaling, etc. In one forward propagation, a random combination of multiple transformation operations can be employed. In this way, the model can be made resistant to image changes, which effectively improves the robustness of the model.

In some embodiments, the degree to which each of the plurality of transformation operations changes the second image 514 may remain unchanged. In other embodiments, a degree to which at least one operation of the plurality of transformation operations changes the second image may increase as the number of training rounds increases. For example, the degree of change may be in a linear growth mode. The degree to which the transformation operation changes the second image 514 is associated with the intensity coefficients of the transformation operation. The degree of change increasing with the number of training rounds means that the intensity of the transformation operation may increase linearly with number of the training rounds. For example, if the transformation operation is clipping, the scale of the clipping may increase as the number of the training rounds increases. As another example, if the transformation operation is noise addition, the amount or strength of the added noise may increase as the number of the training rounds increases. As an example, one or more transformation operations may be selected from the plurality of transformation operations in each training rounds to increase the degree of change. As another example, the degree of change may be increased for each transformation operation in each training round.

Thus, in the early stage of model training, a weaker transformation operation is used for training, and as the number of training rounds increases, the intensity of the transformation operations is continuously increased, so that the model can be more easily converged, and the training effect of the model is improved. This can be viewed as a progressive data enhancement strategy that can effectively improve the robustness of the model to different degrees of image changes.

Continuing with the architecture 500, the third image 524 is provided to a watermark extraction model 530. The watermark extraction model 530 may extract watermark information 532 from the third image 524.

In some embodiments, the watermark embedding model 510 and the watermark extraction model 530 may be trained based on an objective function related to a difference between the watermark information 532 and the reference watermark information 502. The objective function may be configured to make the extracted watermark information being consistent with the real watermark information as much as possible. The objective function herein may be a loss function. The loss function used for the difference of the watermark information may include, for example, a mean square error (MSE) loss function. However, other loss functions are also possible, for example, an L1 loss function and an L2 loss function. In the example of FIG. 5, an extraction loss 508 may be determined based on the difference between the reference watermark information 502 and the extracted watermark information 532. The watermark embedding model 510 and the watermark extraction model 530 may be trained through the back propagation of the extraction loss 508.

In addition to the extraction loss 508, other objective functions or loss functions may be used in training the watermark embedding model 510 and/or the watermark extraction model 530. As shown in FIG. 5, an embedding loss 541 may be determined based on a difference between the first image 504 and the second image 514. The embedding loss 541 is used to ensure that an image embedded with a watermark is similar as its original image as much as possible. For example, the embedding loss 541 may be determined by using a MSE loss function. In some embodiments, a multi-scale structure similarity (MS-SSIM) loss function may additionally be employed to further enhance the visual effect of the watermark image.

At least one of a mean square error (MSE) loss function, a structure similarity (SSIM) loss function, a binary cross entropy (BCE) loss function is employed. In particular, the watermark embedding model 510 may be trained based on an embedding loss 541 between the first image 504 and the second image 514 and the watermark extraction model 530 may be trained based on an extraction loss 508 between the reference watermark information 502 and the watermark information 532. The training objective of the watermark embedding model 510 at least includes having an embedding loss 541 less than a first threshold, and the training objective of the watermark extraction model 530 at least includes having an extraction loss 508 less than a second threshold.

In some embodiments, the watermark embedding model 510 may be trained in an adversarial manner. In such embodiments, the architecture 500 may also include a discriminator 540. The training discriminator 540 may include two objectives. One is to make the discriminator 540 determine the first image 504 (i. e., the original image) to be true and determine the second image 514 (i. e., the image embedded with the watermark) to be false. This objective is represented by the adversarial loss 542. Another objective is to make the discriminator 540 determine the second image 514 to be true. Another objective is represented by embedding loss 543. For example, for the discriminator 540, a binary cross entropy (BCE) loss function may be used.

For training of the model, any suitable training set and validation set may be employed. The images in the training set and validation set are scaled to a predetermined image block size (e. g., 128*128), and the watermark information also has the same length (e. g., 64 bits). Reasonable weights may then be assigned to various loss functions described above. Any suitable optimizer (e. g., an Adam optimizer) and a learning rate decay strategy (e. g., an exponential decay strategy) may be employed.

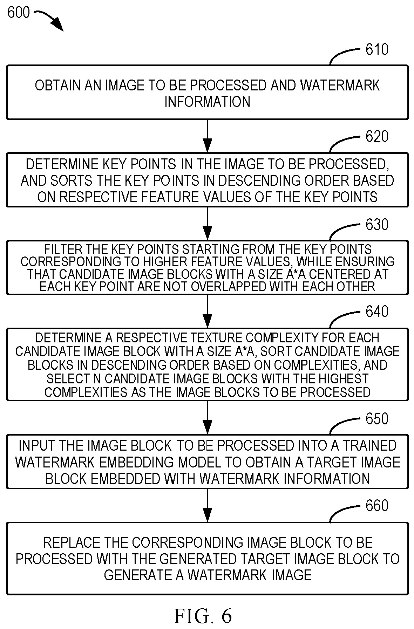

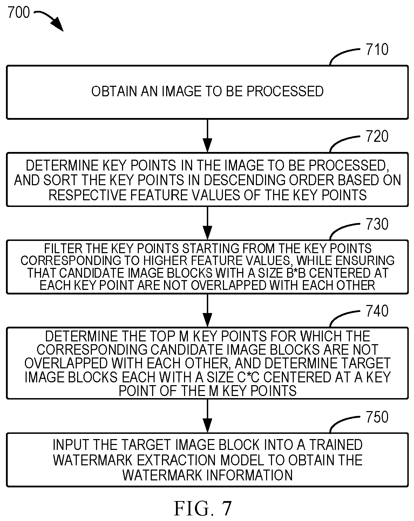

Some example embodiments of watermark embedding and watermark extraction are described above with reference to FIG. 2 to FIG. 5, respectively. Exemplary processes of watermark embedding and watermark extraction are described below with reference to FIG. 6 and FIG. 7, respectively.

FIG. 6 illustrates a schematic diagram of a watermark embedding process 600 according to some embodiments of the present disclosure. The process 600 may be implemented at an electronic device 110. For ease of discussion, the process 600 will be described with reference to the environment 100A of FIG 1A.

At block 610, the electronic device 110 obtains an image to be processed 102 and watermark information 104. The image to be processed 102 may be an image of arbitrary resolution.

At block 620, the electronic device 110 determines key points in the image to be processed 102, and sorts the key points in descending order based on respective feature values of the key points. For example, an ORB key point algorithm may be employed to identify key points, and determine the feature value for each key point. In addition, the sorting may be performed according to the feature values in descending order.

At block 630, the electronic device 110 filters the key points starting from the key points corresponding to higher feature values, while ensuring that the candidate image blocks with a size a*a centered at each key point are not overlapped with each other. The a*a may be, for example, 128*128, and an IOU algorithm may be used to determine whether image blocks are overlapped.

At block 640, the electronic device 110 determines the respective texture complexity for each candidate image block with a size a*a, sorts candidate image blocks in descending order based on the complexities, and selects N candidate image blocks with the highest complexities as the image blocks to be processed. N may be, for example, 10. For example, a texture complexity may be calculated by using a JND algorithm.

At block 650, the electronic device 110 inputs the image block to be processed into a trained watermark embedding model to obtain a target image block embedded with watermark information, which will also be referred to as a watermark image block. For example, a BCH algorithm is used to add error correction bits to binary watermark information, thereby obtaining a 64-bit watermark binary string including 24-bit error correction bits. For the selected image blocks, they are firstly preprocessed, and then input to the trained watermark embedding model together with the watermark information.

At block 660, the electronic device 110 replaces the corresponding image block to be processed with the generated target image block to generate a watermark image. That is, the original image block is replaced with a watermark image block to obtain the watermark image.

FIG. 7 illustrates a schematic diagram of an example watermark extraction process 700 according to some embodiments of the disclosure. Process 700 may be implemented at electronic device 120. For ease of discussion, process 700 will be described with reference to environment 100B of FIG. 1B.

At block 710, the electronic device 120 obtains an image to be processed 106. The image to be extracted 106 is an image that may include a watermark.

At block 720, the electronic device 120 determines key points in the image to be processed 106, and sorts the key points in descending order based on respective feature values of the key points.

At block 730, the electronic device 120 filters the key points starting from the key points corresponding to the higher feature values, while ensuring that candidate image blocks with a size b*b centered at each key point are not overlapped with each other. The b*b may be, for example, 64*64. An IOU algorithm may be used to determine whether image blocks are overlapped.

At block 740, the electronic device 120 determines the top M key points for which the corresponding candidate image blocks are not overlapped with each other, and determines target image each with a size c*c centered at a key point of the M key points. M is, for example, 50, c*c is, for example, 128*128.

At block 750, the electronic device 120 inputs the target image block into the trained watermark extraction model to obtain the watermark information. For example, the selected image blocks may be preprocessed and then input to the trained watermark extraction model to obtain probability vectors with the same length as the watermark. By setting an appropriate threshold, a plurality of binary watermark strings can be obtained. Then a verification can be performed by using a BCH error correction algorithm, and a successfully-verified watermark string is the correct watermark string.

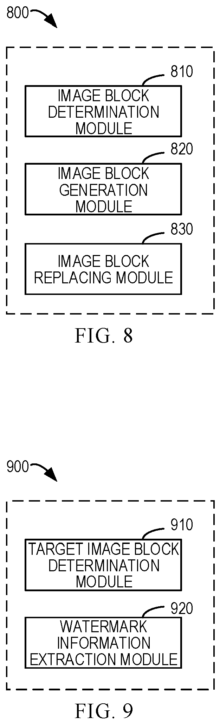

FIG. 8 illustrates a schematic structural block diagram of an apparatus 800 for watermark embedding according to certain embodiments of the present disclosure. The apparatus 800 may be implemented as or included in an electronic device 110. The various modules/components in the apparatus 800 may be implemented by hardware, software, firmware, or any combination thereof.

As shown, the apparatus 800 includes an image block determination module 810, configured to determine, based on a set of key points identified in an image to be processed, at least one image block to be processed of the image to be processed. The apparatus 800 further comprises an image block generation module 820, configured to generate at least one target image block corresponding to at least one image block to be processed based on watermark information and the at least one image block to be processed respectively, wherein each target image block is embedded with at least a part of the watermark information. The apparatus 800 further comprises an image block replacing module 830 configured to generate a target image for the image to be processed by replacing at least one image block to be processed with at least one target image block in the image to be processed respectively.

In some embodiments, an image block determination module 810 comprises: a candidate image block determination module configured to determine a set of candidate image blocks in the image to be processed based on respective feature values of the set of key points and respective positions of the set of key points in the image to be processed, each candidate image block comprising at least one key point in the set of key points; and an image block to be processed determination module configured to determine the at least one image block to be processed from the set of candidate image blocks.

In some embodiments, different candidate image blocks of a set of candidate image blocks are not overlapped with each other.

In some embodiments, the image block to be processed determination module comprises: a texture complexity determination module configured to determine respective texture complexities for the set of candidate image blocks; and an image block selection module configured to select the at least one image block to be processed from the set of candidate image blocks based on the respective texture complexities.

In some embodiments, the image block generation module 820 is further configured to: for an image block to be processed of the at least one image block to be processed, obtain a target image block corresponding to the image block to be processed by: generating, based on a feature of the watermark information and a feature of the image block to be processed, a fusion feature of the watermark information and the image block to be processed; and generating the target image block based on the fusion feature, the feature of the watermark information and the image block to be processed.

In some embodiments, the image block generation module 820 comprises: an intermediate feature generation module configured to generate an intermediate feature enhanced with the watermark information based on the fusion feature and the feature of the watermark information; and a target image block generation module configured to generate the target image block based on the intermediate feature and the image block to be processed.

In some embodiments, a target image block corresponding to the image block to be processed is obtained by using a watermark embedding model, and the watermark embedding model is trained as follows: embedding reference watermark information into a first image by using the watermark embedding model to obtain a second image; generating a third image by performing a plurality of transformation operations on the second image; determining a difference between watermark information extracted from the third image and the reference watermark information; and training the watermark embedding model based on an objective function related to the difference.

In some embodiments, a degree to which at least one operation of the plurality of transformation operations changes the second image increases as the number of training rounds increases.

FIG. 9 shows a schematic structural block diagram of an apparatus 900 for watermark extraction, in accordance with certain embodiments of the present disclosure. The apparatus 900 may be implemented as or included in an electronic device 120. The various modules/components in the apparatus 900 may be implemented by hardware, software, firmware, or any combination thereof.

As shown, the apparatus 900 includes a target image block determination module 910 configured to determine, based on a set of key points identified in an image to be extracted, at least one target image block in the image to be extracted. The apparatus 900 further includes a watermark information extraction module 920 configured to determine, based on the at least one target image block respectively, watermark information embedded in the image to be extracted.

In some embodiments, a target image block determination module 910 comprises: a candidate image block determination module configured to determine a set of candidate image blocks in the image to be extracted based on respective feature values of the set of key points and respective positions of the set of key points in the image to be extracted, each candidate image block comprising at least one key point in the set of key points; and an image block selection module configured to determine the at least one target image block based on the set of candidate image blocks.

In some embodiments, different candidate image blocks of a set of candidate image blocks are not overlapped with each other.

In some embodiments, a set of candidate image blocks respectively have a first size, and the image block selection module is further configured to determine, for a candidate image block in the set of candidate image blocks and based on a position of a key point included in the candidate image block in an image to be extracted, an image block including the key point and having a second size as one of at least one target image block, wherein the second size is greater than the first size.

In some embodiments, the watermark information is determined using a watermark extraction model, and the watermark extraction model is trained as follows: obtaining a second image by embedding reference watermark information into a first image; generating a third image by performing a plurality of transformation operations on the second image; determining a difference between watermark information extracted from the third image by using a watermark extraction model and reference watermark information; and training the watermark extraction model based on a objective function related to the differences.

In some embodiments, the degree to which at least one of the plurality of transformation operations changes the second image increases as the training passes increase.

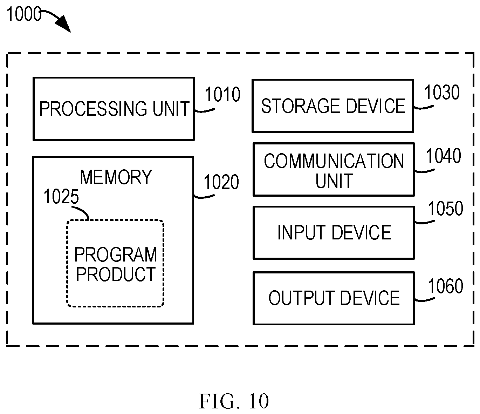

FIG. 10 illustrates a block diagram of an electronic device 1000 in which one or more embodiments of the present disclosure may be implemented. It should be understood that the electronic device 1000 shown in FIG. 10 is merely exemplary and should not constitute any limitation on the functionality and scope of the embodiments described herein. The electronic device 1000 shown in FIG. 10 may be used to implement the electronic device 110 and/or the electronic device 120 of FIG. 1.

As shown in FIG. 10, the electronic device 1000 is in the form of a general-purpose electronic device. Components of the electronic device 1000 may include, but are not limited to, one or more processors or processing units 1010, a memory 1020, a storage device 1030, one or more communications units 1040, one or more input devices 1050, and one or more output devices 1060. The processing unit 1010 may be an actual or virtual processor and can perform various processes according to programs stored in the memory 1020. In a multiprocessor system, a plurality of processing units execute computer executable instructions in parallel, so as to improve the parallel processing capability of the electronic device 1000.

The electronic device 1000 typically includes a number of computer storage media. Such media may be any available media that are accessible by electronic device 1000, including, but not limited to, volatile and non-volatile media, removable and non-removable media. The memory 1020 may be a volatile memory (e. g., a register, cache, random access memory (RAM)), non-volatile memory (e.g., read-only memory (ROM), electrically erasable programmable read-only memory (EEPROM), flash memory), or some combination thereof. The storage device 1030 may be a removable or non-removable medium and may include a machine-readable medium such as a flash drive, a magnetic disk, or any other medium that can be used to store information and/or data (e. g., training data for training) and that can be accessed within the electronic device 1000.

The electronic device 1000 may further include additional removable/non-removable, volatile/nonvolatile storage media. Although not shown in FIG. 10, a magnetic disk drive for reading from or writing to a removable, nonvolatile magnetic disk such as a "floppy disk" and an optical disk drive for reading from or writing to a removable, nonvolatile optical disk may be provided. In these cases, each drive may be connected to a bus (not shown) by one or more data media interfaces. The memory 1020 may include a computer program product 1025 having one or more program modules configured to perform various methods or actions of various embodiments of the present disclosure.

The communication unit 1040 implements communication with other electronic devices through a communication medium. In addition, functions of components of the electronic device 1000 may be implemented by a single computing cluster or a plurality of computing machines, and these computing machines can communicate through a communication connection. Thus, the electronic device 1000 may operate in a networked environment using logical connections to one or more other servers, network personal computers (PCs), or another network node.

The input device 1050 may be one or more input devices such as a mouse, keyboard, trackball, etc. The output device 1060 may be one or more output devices such as a display, speaker, printer, etc. The electronic device 1000 may also communicate with one or more external devices (not shown) such as a storage device, a display device, or the like through the communication unit 1040 as required, and communicate with one or more devices that enable a user to interact with the electronic device 1000, or communicate with any device (e. g., a network card, a modem, or the like) that enables the electronic device 1000 to communicate with one or more other electronic devices. Such communication may be performed via an input/output (I/O) interface (not shown).

According to an exemplary implementation of the present disclosure, a computer readable storage medium is provided, on which a computer-executable instruction is stored, wherein the computer executable instruction is executed by a processor to implement the above-described method. According to an exemplary implementation of the present disclosure, there is also provided a computer program product, which is tangibly stored on a non-transitory computer readable medium and includes computer-executable instructions that are executed by a processor to implement the method described above.

Aspects of the present disclosure are described herein with reference to flowchart and/or block diagrams of methods, apparatus, devices and computer program products implemented in accordance with the present disclosure. It will be understood that each block of the flowcharts and/or block diagrams and combinations of blocks in the flowchart and/or block diagrams can be implemented by computer readable program instructions.

These computer readable program instructions may be provided to a processing unit of a general-purpose computer, special purpose computer, or other programmable data processing apparatus to produce a machine, such that the instructions, which execute via the processing unit of the computer or other programmable data processing apparatus, create means for implementing the functions/actions specified in one or more blocks of the flowchart and/or block diagrams. These computer readable program instructions may also be stored in a computer readable storage medium that can direct a computer, a programmable data processing apparatus, and/or other devices to function in a particular manner, such that the computer readable medium storing the instructions includes an article of manufacture including instructions which implement various aspects of the functions/actions specified in one or more blocks of the flowchart and/or block diagrams.

The computer readable program instructions may be loaded onto a computer, other programmable data processing apparatus, or other devices, causing a series of operational steps to be performed on a computer, other programmable data processing apparatus, or other devices, to produce a computer implemented process such that the instructions, when being executed on the computer, other programmable data processing apparatus, or other devices, implement the functions/actions specified in one or more blocks of the flowchart and/or block diagrams.

The flowcharts and block diagrams in the drawings illustrate the architecture, functionality, and operations of possible implementations of the systems, methods and computer program products according to various implementations of the present disclosure. In this regard, each block in the flowchart or block diagram may represent a module, segment, or portion of instructions which includes one or more executable instructions for implementing the specified logical function(s). In some alternative implementations, the functions marked in the blocks may occur in a different order than those marked in the drawings. For example, two consecutive blocks may actually be executed in parallel, or they may sometimes be executed in reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operations, or may be implemented using a combination of dedicated hardware and computer instructions.

Various implementations of the disclosure have been described as above, the foregoing description is exemplary, not exhaustive, and the present application is not limited to the implementations as disclosed. Many modifications and variations will be apparent to those of ordinary skill in the art. The selection of terms used herein is intended to best explain the principles of the implementations, the practical application, or improvements to technologies in the marketplace, or to enable those skilled in the art to understand the implementations disclosed herein.

## Claims

1. A method (200) of watermark embedding, comprising:
determining (210), based on a set of key points identified in an image to be processed, at least one image block to be processed in the image to be processed, wherein determining (210) the at least one image block to be processed comprises:
determining a set of candidate image blocks in the image to be processed based on respective feature values of the set of key points and respective positions of the set of key points in the image to be processed, each candidate image block comprising at least one key point in the set of key points;
determining respective texture complexities for the set of candidate image blocks; and
selecting the at least one image block to be processed from the set of candidate image blocks based on the respective texture complexities;
generating (220), based on watermark information and the at least one image block to be processed, at least one target image block corresponding to the at least one image block to be processed respectively, each target image block being embedded with at least a portion of the watermark information; and
generating (230) a target image for the image to be processed by replacing the at least one image block to be processed with the at least one target image block in the image to be processed respectively.

2. The method of claim 1, wherein different candidate image blocks in the set of candidate image blocks are not overlapped with each other.

3. The method of claim 1, wherein generating (220) the at least one target image block comprises:
for an image block to be processed of the at least one image block to be processed, obtaining a target image block corresponding to the image block to be processed by:
generating, by stitching a feature of the watermark information and a feature of the image block to be processed, a fusion feature of the watermark information and the image block to be processed; and
generating the target image block based on the fusion feature, the feature of the watermark information and the image block to be processed.

4. The method of claim 3, wherein generating (230) the target image block comprises:
generating an intermediate feature enhanced with the watermark information based on the fusion feature and the feature of the watermark information; and
generating the target image block based on the intermediate feature and the image block to be processed.

5. The method of claim 1 or 3, wherein a target image block corresponding to the image block to be processed is obtained by using a watermark embedding model, and the watermark embedding model is trained as follows:
embedding reference watermark information into a first image by using the watermark embedding model to obtain a second image;
generating a third image by performing a plurality of transformation operations on the second image;
determining a difference between watermark information extracted from the third image and the reference watermark information; and
training the watermark embedding model based on an objective function related to the difference.

6. The method of claim 5, wherein a degree to which at least one operation of the plurality of transformation operations changes the second image increases as the number of training rounds increases.

7. A method (400) of watermark extraction, comprising:
determining (410), based on a set of key points identified in an image to be extracted, at least one target image block in the image to be extracted, wherein determining (410) the at least one target image block comprises:
determining a set of candidate image blocks in the image to be extracted based on respective feature values of the set of key points and respective positions of the set of key points in the image to be extracted, each candidate image block comprising at least one key point in the set of key points; and
determining the at least one target image block based on the set of candidate image blocks;
wherein a size of a target image block of the at least one target image block is larger than a size of a candidate image block of the set of candidate image blocks, and the set of candidate image blocks do not overlap with each other; and
determining (420), based on the at least one target image block respectively, watermark information embedded in the image to be extracted.

8. The method of claim 7, wherein the watermark information is determined by using a watermark extraction model and the watermark extraction model is trained as follows:
obtaining a second image by embedding reference watermark information into a first image;
generating a third image by performing a plurality of transformation operations on the second image;
determining a difference between watermark information extracted from the third image by using the watermark extraction model and the reference watermark information; and
training the watermark extraction model based on an objective function related to the difference.

9. An electronic device (1000), comprising:
at least one processing unit (1010); and
at least one memory (1020) coupled to the at least one processing unit (1010) and storing instructions configured to be executed by the at least one processing unit (1010), the instructions, when executed by the at least one processing unit (1010), causing the electronic device (1000) to implement a method of any of claims 1 to 6 or 7 to 8.

10. A computer readable storage medium having stored thereon a computer program comprising instructions that, when executed by a processor, cause the processor to implement a method of any of claims 1 to 6 or 7 to 8.

## Patentansprüche

1. Verfahren (200) zur Wasserzeicheneinbettung, umfassend:
Bestimmen (210), basierend auf einer Menge von Schlüsselpunkten, die in einem zu verarbeitenden Bild identifiziert wurden, mindestens eines zu verarbeitenden Bildblocks in dem zu verarbeitenden Bild, wobei Bestimmen (210) des mindestens einen zu verarbeitenden Bildblocks umfasst:
Bestimmen einer Menge von Kandidatenbildblöcken im zu verarbeitenden Bild, basierend auf jeweiligen Merkmalswerten der Menge von Schlüsselpunkten und jeweiligen Positionen der Menge von Schlüsselpunkten im zu verarbeitenden Bild, wobei jeder Kandidatenbildblock mindestens einen Schlüsselpunkt in der Menge von Schlüsselpunkten umfasst;
Bestimmen jeweiliger Texturkomplexitäten für die Menge von Kandidatenbildblöcken; und
Auswählen des mindestens einen zu verarbeitenden Bildblocks aus der Menge von Kandidatenbildblöcken, basierend auf den jeweiligen Texturkomplexitäten;
Erzeugen (220), basierend auf Wasserzeicheninformationen und dem mindestens einen zu verarbeitenden Bildblock, mindestens eines Zielbildblocks, der jeweils dem mindestens einen zu verarbeitenden Bildblock entspricht, wobei in jeden Zielbildblock mindestens ein Teil der Wasserzeicheninformationen eingebettet ist; und
Erzeugen (230) eines Zielbilds für das zu verarbeitende Bild, indem der mindestens eine zu verarbeitende Bildblock jeweils durch den mindestens einen Zielbildblock im zu verarbeitenden Bild ersetzt wird.

2. Verfahren nach Anspruch 1, wobei verschiedene Kandidatenbildblöcke in der Menge von Kandidatenbildblöcken einander nicht überlappen.

3. Verfahren nach Anspruch 1, wobei Erzeugen (220) des mindestens einen Zielbildblocks umfasst:
für einen zu verarbeitenden Bildblock von dem mindestens einen zu verarbeitenden Bildblock, Erhalten eines Zielbildblocks, der dem zu verarbeitenden Bildblock entspricht, durch:
Erzeugen, durch Zusammenfügen eines Merkmals der Wasserzeicheninformationen und eines Merkmals des zu verarbeitenden Bildblocks, eines Fusionsmerkmals aus den Wasserzeicheninformationen und dem zu verarbeitenden Bildblock; und
Erzeugen des Zielbildblocks basierend auf dem Fusionsmerkmal, dem Merkmal der Wasserzeicheninformationen und dem zu verarbeitenden Bildblock.

4. Verfahren nach Anspruch 3, wobei Erzeugen (230) des Zielbildblocks umfasst:
Erzeugen eines Zwischenmerkmals, das mit den Wasserzeicheninformationen angereichert ist, basierend auf dem Fusionsmerkmal und dem Merkmal der Wasserzeicheninformationen; und
Erzeugen des Zielbildblocks basierend auf dem Zwischenmerkmal und dem zu verarbeitenden Bildblock.

5. Verfahren nach Anspruch 1 oder 3, wobei ein Zielbildblock, der dem zu verarbeitenden Bildblock entspricht, unter Verwendung eines Wasserzeicheneinbettungsmodells erhalten wird und das Wasserzeicheneinbettungsmodell wie folgt trainiert wird:
Einbetten von Referenzwasserzeicheninformationen in ein erstes Bild unter Verwendung des Wasserzeicheneinbettungsmodells, um ein zweites Bild zu erhalten;
Erzeugen eines dritten Bilds durch Durchführen einer Vielzahl von Transformationsoperationen am zweiten Bild;
Bestimmen eines Unterschieds zwischen den aus dem dritten Bild extrahierten Wasserzeicheninformationen und den Referenzwasserzeicheninformationen; und
Trainieren des Wasserzeicheneinbettungsmodell basierend auf einer Zielfunktion, die mit der Differenz zusammenhängt.

6. Verfahren nach Anspruch 5, wobei ein Grad, in dem mindestens eine Operation der Vielzahl von Transformationsoperationen das zweite Bild verändert, mit steigender Anzahl der Trainingsrunden ansteigt.

7. Verfahren (400) zur Wasserzeichenextraktion, umfassend:
Bestimmen (410), basierend auf einer Menge von Schlüsselpunkten, die in einem zu extrahierenden Bild identifiziert wurden, mindestens eines Zielbildblocks in dem zu extrahierenden Bild, wobei Bestimmen (410) des mindestens einen Zielbildblocks umfasst:
Bestimmen einer Menge von Kandidatenbildblöcken im zu extrahierenden Bild, basierend auf jeweiligen Merkmalswerten der Menge von Schlüsselpunkten und jeweiligen Positionen der Menge von Schlüsselpunkten im zu extrahierenden Bild, wobei jeder Kandidatenbildblock mindestens einen Schlüsselpunkt in der Menge von Schlüsselpunkten umfasst; und
Bestimmen des mindestens einen Zielbildblocks, basierend auf der Menge von Kandidatenbildblöcken;
wobei eine Größe eines Zielbildblocks des mindestens einen Zielbildblocks größer ist als eine Größe eines Kandidatenbildblocks aus der Menge von Kandidatenbildblöcken, und die Menge von Kandidatenbildblöcken einander nicht überlappen; und
Bestimmen (420), basierend jeweils auf dem mindestens einen Zielbildblock, von in dem zu extrahierenden Bild eingebetteten Wasserzeicheninformationen.

8. Verfahren nach Anspruch 7, wobei die Wasserzeicheninformationen unter Verwendung eines Wasserzeichenextraktionsmodells bestimmt werden und das Wasserzeichenextraktionsmodell wie folgt trainiert wird:
Erhalten eines zweiten Bilds durch Einbetten von Referenzwasserzeicheninformationen in ein erstes Bild;
Erzeugen eines dritten Bilds durch Durchführen einer Vielzahl von Transformationsoperationen am zweiten Bild;
Bestimmen eines Unterschieds zwischen den unter Verwendung des Wasserzeichenextraktionsmodells aus dem dritten Bild extrahierten Wasserzeicheninformationen und den Referenzwasserzeicheninformationen; und
Trainieren des Wasserzeichenextraktionsmodell basierend auf einer Zielfunktion, die mit der Differenz zusammenhängt.

9. Elektronische Vorrichtung (1000), umfassend:
mindestens eine Verarbeitungseinheit (1010); und
mindestens einen Speicher (1020), der mit der mindestens einen Speichereinheit (1010) gekoppelt ist und Anweisungen speichert, die dazu konfiguriert sind, von der mindestens einen Verarbeitungseinheit (1010) ausgeführt zu werden, wobei die Anweisungen, wenn sie von der mindestens einen Verarbeitungseinheit (1010) ausgeführt werden, die elektronische Vorrichtung (1000) veranlassen, ein Verfahren nach einem der Ansprüche 1 bis 6 oder 7 bis 8 zu implementieren.

10. Computerlesbares Speichermedium, das ein Computerprogramm darauf gespeichert aufweist, das Anweisungen umfasst, die, wenn sie von einem Prozessor ausgeführt werden, den Prozessor veranlassen, ein Verfahren nach einem der Ansprüche 1 bis 6 oder 7 bis 8 zu implementieren.

## Revendications

1. Procédé (200) d'insertion de filigrane, comprenant :
la détermination (210), à partir d'un ensemble de points clés identifiés dans une image à traiter, d'au moins un bloc d'image à traiter dans l'image à traiter, dans lequel la détermination (210) du ou des blocs d'image à traiter comprend :
la détermination d'un ensemble de blocs d'images candidats dans l'image à traiter en fonction des valeurs de caractéristiques respectives de l'ensemble des points clés et des positions respectives de l'ensemble des points clés dans l'image à traiter, chaque bloc d'image candidat comprenant au moins un point clé dans l'ensemble des points clés ;
la détermination de complexités de texture respectives pour l'ensemble des blocs d'images candidats ; et
la sélection d'au moins un bloc d'image à traiter parmi l'ensemble des blocs d'images candidats en fonction des complexités de texture respectives ;
la génération (220), sur la base des informations de filigrane et d'au moins un bloc d'image à traiter, d'au moins un bloc d'image cible correspondant respectivement à au moins un bloc d'image à traiter, chaque bloc d'image cible étant intégré avec au moins une partie des informations de filigrane ; et
la génération (230) d'une image cible pour l'image à traiter en remplaçant au moins un bloc d'image à traiter par au moins un bloc d'image cible dans l'image à traiter respectivement.

2. Procédé selon la revendication 1, dans lequel les différents blocs d'images candidats de l'ensemble des blocs d'images candidats ne se chevauchent pas.

3. Procédé selon la revendication 1, dans lequel la génération (220) d'au moins un bloc d'image cible comprend :
pour qu'un bloc d'image à traiter soit traité parmi le au moins un bloc d'image à traiter, l'obtention d'un bloc d'image cible correspondant au bloc d'image à traiter par :
la génération, en combinant une caractéristique des informations du filigrane et une caractéristique du bloc d'image à traiter, d'une caractéristique de fusion des informations du filigrane et du bloc d'image à traiter ; et
la génération du bloc d'image cible basé sur la caractéristique de fusion, la caractéristique des informations de filigrane et le bloc d'image à traiter.

4. Procédé selon la revendication 3, dans lequel la génération (230) du bloc d'image cible comprend :
la génération d'une caractéristique intermédiaire enrichie des informations de filigrane, basée sur la caractéristique de fusion et la caractéristique des informations de filigrane ; et
la génération du bloc d'image cible à partir de la caractéristique intermédiaire et du bloc d'image à traiter.

5. Procédé selon la revendication 1 ou 3, dans lequel un bloc d'image cible correspondant au bloc d'image à traiter est obtenu à l'aide d'un modèle d'intégration de filigrane, et le modèle d'intégration de filigrane est entraîné comme suit :
intégration d'informations de filigrane de référence dans une première image en utilisant le modèle d'intégration de filigrane pour obtenir une deuxième image ;
génération d'une troisième image en effectuant une pluralité d'opérations de transformation sur la deuxième image ;
détermination d'une différence entre les informations du filigrane extraites de la troisième image et les informations du filigrane de référence ; et
entraînement du modèle d'intégration de filigrane basé sur une fonction objective liée à la différence.

6. Procédé selon la revendication 5, dans lequel le degré auquel au moins une opération de la pluralité d'opérations de transformation modifie la deuxième image augmente à mesure que le nombre de tours d'entraînement augmente.

7. Procédé (400) d'extraction de filigrane, comprenant :
la détermination (410), sur la base d'un ensemble de points clés identifiés dans une image à extraire, d'au moins un bloc d'image cible dans l'image à extraire, dans lequel la détermination (410) du ou des blocs d'image cible comprend :
la détermination d'un ensemble de blocs d'images candidats dans l'image à extraire en fonction des valeurs de caractéristiques respectives de l'ensemble des points clés et des positions respectives de l'ensemble des points clés dans l'image à extraire, chaque bloc d'image candidat comprenant au moins un point clé dans l'ensemble des points clés ; et
la détermination d'au moins un bloc d'image cible à partir de l'ensemble des blocs d'images candidats ;
dans lequel la taille d'un bloc d'image cible de l'au moins un bloc d'image cible est supérieure à la taille d'un bloc d'image candidat de l'ensemble des blocs d'images candidats, et les blocs d'images candidats de l'ensemble ne se chevauchent pas ; et
la détermination (420), sur la base d'au moins un bloc d'image cible respectivement, d'informations de filigrane intégrées dans l'image à extraire.

8. Procédé selon la revendication 7, dans lequel les informations de filigrane sont déterminées à l'aide d'un modèle d'extraction de filigrane et ce modèle d'extraction de filigrane est entraîné comme suit :
obtention d'une deuxième image en intégrant des informations de filigrane de référence dans une première image ;
génération d'une troisième image en effectuant une pluralité d'opérations de transformation sur la deuxième image ;
détermination d'une différence entre les informations de filigrane extraites de la troisième image à l'aide du modèle d'extraction de filigrane et les informations de filigrane de référence ; et
entraînement du modèle d'extraction de filigrane basé sur une fonction objective liée à la différence.

9. Dispositif électronique (1000), comprenant :
au moins une unité de traitement (1010) ; et
au moins une mémoire (1020), couplée à l'au moins une unité de traitement (1010) et stockant des instructions configurées pour être exécutées par l'au moins une unité de traitement (1010), les instructions, lorsqu'elles sont exécutées par l'au moins une unité de traitement (1010), amenant le dispositif électronique (1000) à mettre en œuvre un procédé selon l'une quelconque des revendications 1 à 6 ou 7 à 8.

10. Support de stockage lisible par ordinateur sur lequel est stocké un programme informatique comprenant des instructions qui, lorsqu'elles sont exécutées par un processeur, amènent le processeur à mettre en œuvre un procédé selon l'une quelconque des revendications 1 à 6 ou 7 à 8.
